Europäisches Patentamt

European Patent Office

Office européen des brevets

(11) Veröffentlichungsnummer: **0 374 298**
**A1**

(12) **EUROPÄISCHE PATENTANMELDUNG**

(21) Anmeldenummer: **88121550.3**

(22) Anmeldetag: **23.12.88**

(51) Int. Cl.⁵: **H05G 1/02, H05G 1/64, G03B 42/02**

Geänderte Patentansprüche gemäss Regel 86 (2) EPÜ.

(43) Veröffentlichungstag der Anmeldung:
**27.06.90 Patentblatt 90/26**

(84) Benannte Vertragsstaaten:
**DE FR GB**

(71) Anmelder: **Siemens Aktiengesellschaft**
**Wittelsbacherplatz 2**
**D-8000 München 2(DE)**

(72) Erfinder: **Richter, Helmut**
**Ringstrasse 18a**
**D-8523 Baiersdorf(DE)**
Erfinder: **Kupfer, Adelbert, Dipl.-Ing.(FH)**
**Ringstrasse 15**
**D-8521 Poxdorf(DE)**

(54) **Lichtverteiler für ein Röntgendiagnostikgerät.**

(57) Bei Lichtverteilern (5) besteht der Wunsch, die Aufnahmekomponenten an zueinander spiegelsymmetrische Anschlüsse (13, 14, 15, 16) am Gehäuse des Lichtverteilers (5) anschließen und das Ausgangsbild des Röntgenbildverstärkers zu diesen Anschlüssen (13,14,15,16) lenken zu können. Hierzu soll nur ein Gehäuse für einen Lichtverteiler (5) hergestellt werden, das Spiegelsystem soll durch einen einfachen Umbau den Strahlengang zu spiegelsymmetrischen Anschlüssen (13,14,15,16) lenken. Die Aufgabe wird erfindungsgemäß dadurch gelöst, daß die Spiegel (17,18) derart gelagert sind, daß jeder Spiegel (17,18) an den Platz eines korrespondierenden Spiegels (18,17) setzbar ist, daß eine erste Anordnung des Spiegelsystems im Gehäuse den Strahlengang zu den ersten Anschlüssen (13,14) für die Aufnahmekomponenten lenkt und eine zweite, zur ersten spiegelsymmetrischen Anordnung des Spiegelsystems (17,18) den Strahlengang zu den zweiten Anschlüssen (15,16) für die Aufnahmekomponenten, die zu den ersten spiegelsymmetrisch sind, lenkt.

FIG 2

EP 0 374 298 A1

## Lichtverteiler für ein Röntgendiagnostikgerät

Die Erfindung betrifft einen Lichtverteiler für ein Röntgendiagnostikgerät mit einem Gehäuse und mit einem im Gehäuse angeordneten Spiegelsystem mit mehreren Spiegeln zur Ablenkung des Strahlenganges des Ausgangsbildes eines Röntgenbildverstärkers zu Aufnahmekomponenten, die an ersten Anschlüssen des Gehäuses des Lichtverteilers befestigt sind.

Ein Lichtverteiler der eingangs genannten Art ist beispielsweise aus der US-PS 4,383,328 bekannt. Ein solcher Lichtverteiler lenkt den Strahlengang vom Ausgangsbild eines Röntgenbildverstärkers durch ein Spiegelsystem zu mehreren, am Gehäuse des Lichtverteilers befestigten Aufnahmekomponenten. Hierzu können Spiegel des Spiegelsystems eine von 100% abweichende Reflexion haben und in den Strahlengang verstellt werden.

Bei diesen Lichtverteilern besteht der Wunsch, die Aufnahmekomponenten an zueinander spiegelsymmetrische Anschlüsse am Gehäuse des Lichtverteilers anschließen und das Ausgangsbild des Röntgenbildverstärkers zu diesen Anschlüssen lenken zu können. Es ist ein erstes Gehäuses eines Lichtverteilers bekannt, an dem erste Anschlüsse für die Aufnahmekomponenten vorgesehen sind, wobei im Gehäuse ein erstes Spiegelsystem angeordnet ist zum Lenken des Ausgangsbildes des Röntgenbildverstärkers zu diesen Anschlüssen. Ein zweites Gehäuse mit zum ersten Gehäuse spiegelsymmetrischen Anschlüssen für die Aufnahmekomponenten mit einem zweiten Spiegelsystem zum Lenken des Ausgangsbildes des Röntgenbildverstärkers zu diesen Anschlüssen ist ebenfalls bekannt. Die Herstellung unterschiedlicher Gehäuse und Spiegelsysteme ist kostenintensiv.

Aufgabe der Erfindung ist es daher, einen Lichtverteiler der eingangs genannten Art so auszuführen, daß die Aufnahmekomponenten an zueinander spiegelsymmetrische Anschlüsse eines Gehäuses des Lichtverteilers anschließbar sind und daß ein Spiegelsystem vorgesehen ist zum Lenken des Ausgangsbildes des Röntgenbildverstärkers zu ersten bzw. dazu spiegelsymmetrischen zweiten Anschlüssen für die Aufnahmekomponenten.

Die Aufgabe wird erfindungsgemäß dadurch gelöst, daß die Spiegel derart gelagert sind, daß jeder Spiegel an den Platz eines korrespondierenden Spiegels setzbar ist, daß

a) eine erste Anordnung des Spiegelsystems im Gehäuse den Strahlengang zu den ersten Anschlüssen für die Aufnahmekomponenten lenkt und

b) eine zweite, zur ersten spiegelsymmetrischen Anordnung des Spiegelsystems den Strahlengang zu den zweiten Anschlüssen für die Aufnahmekomponenten, die zu den ersten spiegelsymmetrisch sind, lenkt.

Vorteil der Erfindung ist, daß durch einen einfachen Umbau des Spiegelsystems das Ausgangsbild des Röntgenbildverstärkers zu zueinander spiegelsymmetrischen Anschlüssen am Gehäuse des Lichtverteilers für die Aufnahmekomponenten gelenkt werden kann und daß hierzu nur ein Gehäuse und ein Spiegelsystem notwendig ist, wodurch die Herstellungskosten für einen Lichtverteiler reduziert sind.

Vorteilhafterweise sind die Spiegel auf Halterungen gehaltert, die mit Schrauben in Bohrungen einer Grundplatte des Gehäuses auf dieser befestigt sind, wobei die Halterungen und die Bohrungen so aufeinander abgestimmt sind, daß das Spiegelsystem und Verstellmittel für die Spiegel spiegelsymmetrisch eingebaut werden können. Es ist ein schneller Umbau des Spiegelsystems möglich, so daß die Montagezeit verkürzt ist, der Herstellungsaufwand ist reduziert, da die Herstellung von unterschiedlichen Halterungen für die Spiegel entfällt.

Weitere Vorteile und Einzelheiten der Erfindung ergeben sich aus der nachfolgenden Beschreibung eines Ausführungsbeispiels anhand der Zeichnungen in Verbindung mit den Unteransprüchen.

Dabei zeigt die

Figur 1 eine Röntgendiagnostikeinrichtung mit einem Lichtverteiler nach dem Stand der Technik,

Figur 2 ein Ausführungsbeispiel eines Lichtverteilers nach der Erfindung mit einer ersten Anordnung des Spiegelsystems im Gehäuse des Lichtverteilers in Draufsicht,

Figur 3 einen in den Strahlengang des Röntgenbildverstärkers verstellbaren Spiegel des Spiegelsystems mit Verstellmitteln in Seitenansicht und

Figur 4 eine zur ersten Anordnung spiegelsymmetrische Anordnung des Spiegelsystems im Gehäuse des Lichtverteilers nach der Erfindung.

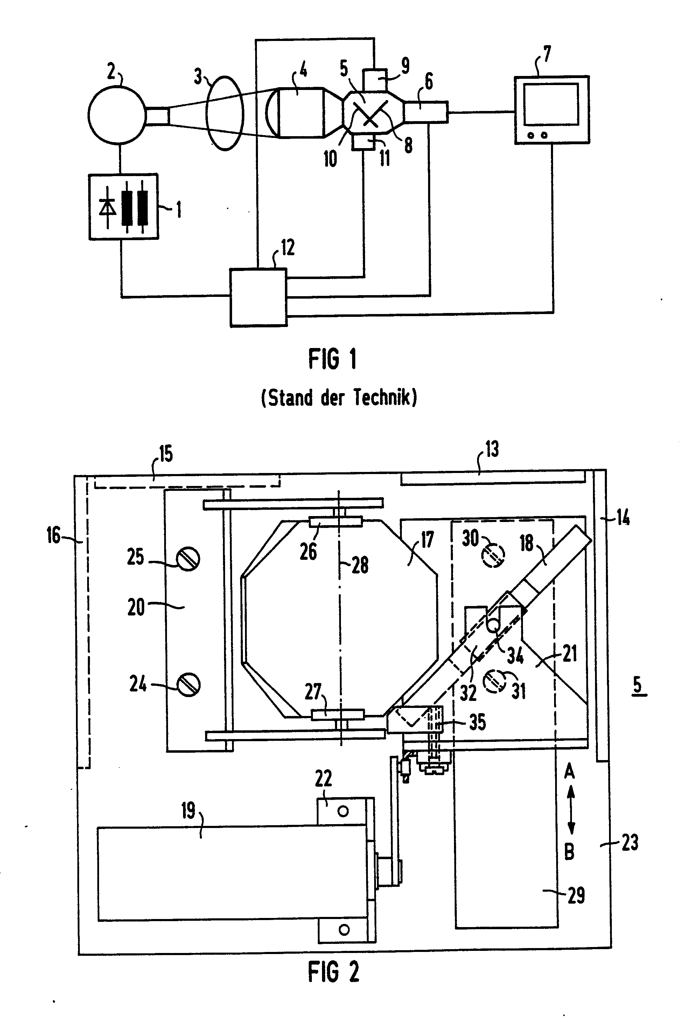

In der Figur 1 ist eine Röntgendiagnostikeinrichtung nach dem Stand der Technik mit einem Hochspannungsgenerator 1 dargestellt, der eine Röntgenröhre 2 betreibt. Die Röntgenröhre 2 sendet ein Strahlenbündel aus, das einen Patienten 3 durchdringt und auf den Eingangsleuchtschirm eines Röntgenbildverstärkers 4 fällt. An dem Ausgang des Röntgenbildverstärkers 4 ist ein Lichtverteiler 5 angekoppelt, an dessen einem Ausgang eine Fernsehkamera 6 als eine erste Aufnahmekomponente befestigt ist. Das Ausgangsbild des Röntgenbildverstärkers 4 kann damit auf einem Monitor 7 darstellt werden. Durch einen ersten beweglichen, in den Strahlengang des Röntgenbildverstärkers 4 einbringbaren Spiegel 8 wird das Ausgangsbild des Röntgenbildverstärkers 4 auf beispielsweise eine Kinokamera 9 als eine zweite Aufnahmekomponente abgelenkt. Ein zweiter beweglicher, ebenfalls in den Strahlengang einbringbarer Spiegel 10 lenkt den Strahlengang in eine andere Richtung ab, so daß das Ausgangsbild des Röntgenbildverstärkers 4 beispielsweise von einer Fotokamera 11 als eine dritte Aufnahmekomponente aufgenommen werden kann. Eine Zentraleinheit 12 bewirkt dabei die Steuerung und Synchronisation des Hochspannungsgenerators 1, der Fernsehkette 6 und 7, der Spiegel 8 und 10 sowie der Kameras 9 und 11.

Die Figur 2 zeigt einen Lichtverteiler 5 mit ersten Anschlüssen 13 und 14 für Aufnahmekomponenten in Draufsicht. In gestrichelter Linie sind zweite Anschlüsse 15 und 16 dargestellt, die zu den ersten spiegelsymmetrisch sind. Die Figur 2 zeigt ein Spiegelsystem mit einem ersten Spiegel 17 und mit einem zweiten, in den Strahlengang des Ausgangsbildes des Röntgenbildverstärkers verstellbaren Spiegel 18 aus Sicht des Röntgenbildverstärkers. Das Spiegelsystem 17, 18 und ein Motor 19 zum Verstellen des Spiegels 18 in den Strahlengang sind über Halterungen 20, 21 und 22 auf einer Grundplatte 23 des Lichtverteilers 5 befestigt. Die Halterung 20 des Spiegels 17 ist mit Schrauben 24, 25 auf der Grundplatte 23 befestigt und lagert den Spiegel 17 über eine Zweipunktlagerung mit zwei Halterungselementen 26 und 27 um eine zur Grundplatte 23 parallele Achse 28 verstellbar. Die Achse 28 ist so ausgerichtet, daß der Spiegel 17 zum Lenken des Ausgangsbildes des Röntgenbildverstärkers zum Anschluß 14 lediglich um die Achse 28 verstellt werden muß. Die Justierung des Spiegels 17 erfolgt durch ein nicht gezeigtes Justierelement, mit dem die Neigung des Spiegels 17, d.h. der Winkel zur Grundplatte 23, der ca. 45° betragen kann, eingestellt wird.

Der Spiegel 18 kann eine von 100% abweichende Reflexion haben und ist über die Halterung 21 auf einer Schiene 29, die auf der Grundplatte 23 durch gestrichelt gezeichnete Schrauben 30 und 31 befestigt ist, in der mit A bzw. B gekennzeichneten Richtung verstellbar gelagert. Der Spiegel 18 ist ebenfalls durch eine Zweipunktlagerung mit zwei Halterungselementen 32 und 33, von denen nur eine gezeigt ist, um eine zur Grundplatte 23 senkrechte Achse 34 verstellbar. Die Achse 34 ist so ausgerichtet, daß die zum Lenken des Ausgangsbildes des Röntgenbildverstärkers zu den Anschlüssen 13 und 14 notwendige Einstellung des Spiegels 18 nur noch durch ein Justierelement 35 erfolgt, welches den Spiegel 18 um die Achse 34 verstellt. In der gezeigten Darstellung lenkt der Spiegel 18 den vom Spiegel 17 kommenden Strahlengang des Ausgangsbildes des Röntgenbildverstärkers zu einem von der Reflexion des Spiegels 18 abhängigen Anteil zum Anschluß 13 für eine Aufnahmekomponente und zu einem von der Transmission des Spiegels 18 abhängigen Anteil zum Anschluß 14 für eine zweite Aufnahmekomponente.

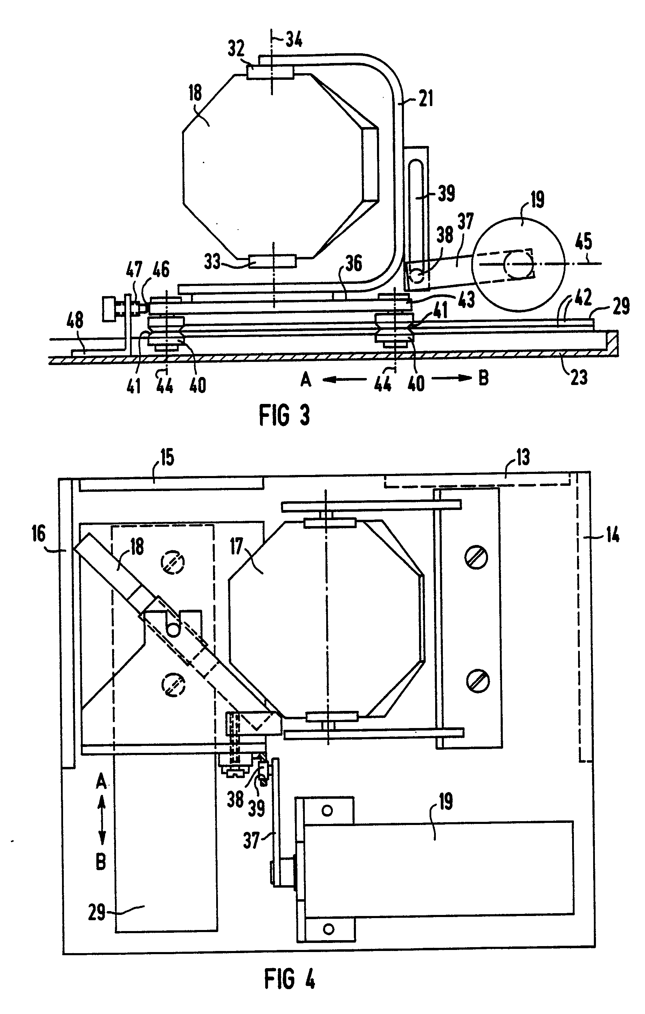

Die Figur 3 zeigt den Spiegel 18 mit seiner Halterung 21, die auf einen Wagen 36 längs der Schiene 29 verstellbar ist und den Motor 19 mit einer Anlenkung 37 mit einem Zapfen 38, der in eine etwa senkrecht zur Grundplatte 23 ausgerichtete Langloch-Führung 39 der Halterung 21 greift, in Seitenansicht. Der Wagen 36 ist durch zylinderförmige Rollager 40, an denen jeweils eine Führungsnut 41 vorgesehen ist, die mit einer Seitenfläche 42 der Schiene 29 in Verbindung steht, an der Schiene 29 gelagert. Es sind vier Rollager 40 vorgesehen, von denen zwei an einer Seite 43 des Wagens 36 über nicht verstellbare Achsen 44 und von denen die zwei weiteren Rollager 40 an der der Seite 43 gegenüberliegenden Seite des Wagens 36 über exzentrisch verstellbare Achsen (nicht gezeigt) gehaltert sind. Durch die verstellbaren Achsen wird der Kontakt der Rollager 40 zu den Seitenflächen 42 der Schiene 29 eingestellt.

Der Spiegel 18 ist in die in der Figur 2 gezeigte Position verfahren. Zur Arretierung des Wagens 36 in dieser Endposition ist die Anlenkung 37 des Motors 19 über die zur Grundplatte 23 parallele Achse 45 verstellt. Dabei wird der Wagen 36 mit seiner Stirnseite 46 gegen einen federbelasteten Druckbolzen 47 gefahren, so daß das Lagerspiel von Anlenkung 37, Zapfen 38, Langlochführung 39 und Wagen 36 aufgehoben ist. Der Druckbolzen 47 ist über eine Halterung 48 auf der Grundplatte 23 befestigt.

Der Spiegel 18 kann durch Ansteuerung des Motors 19 aus dem Strahlengang verstellt werden. Dabei wird die Anlenkung 37 in eine zur Grundplatte 23 etwa senkrechte Position verstellt, so daß der Zapfen 38 in der Langloch-Führung 39 nach oben gleitet, wobei der Wagen 36 in der mit B gekennzeichneten Richtung verstellt wird. Ein größerer Verstellweg wird erhalten, wenn die Anlenkung 37 um 180° um die Achse des Motors 19 verstellt wird.

Die Figur 4 zeigt ein im Gehäuse des Lichtverteilers 5 spiegelsymmetrisch zur Figur 2 angeordnetes Spiegelsystem 17, 18. Die Anschlüsse 15, 16 für die Aufnahmekomponenten sind gegenüber der Figur 2 durch eine Vollinie dargestellt. Zum Umbau des Spiegelsystems 17, 18 werden die Schrauben 24, 25, 30 und 31 entfernt. Die Halterung 20 des Spiegels 17 wird an die Stelle der Grundplatte 23 versetzt, an der zuvor die Schiene 29 angeordnet war und wird durch die Schrauben 24 und 25, die in die Bohrungen der Schrauben 30 und 31 eingeschraubt werden, auf der Grundplatte 23 befestigt. Die Schiene 29 wird an die Stelle der Grundplatte 23 versetzt, an der zuvor die Halterung 20 angeordnet war und wird durch Schrauben 30 und 31, die in die Bohrungen der Schrauben 24 und 25 eingeschraubt werden, auf der Grundplatte 23 befestigt. Der Druckbolzen 47 mit seiner Halterung 48 wird an eine zum Arretieren des Wagens 36 entsprechende Position der Grundplatte 23 versetzt. Der Spiegel 18 wird im Uhrzeigersinn um 90° um die Achse 34 verstellt, damit er, wenn er in den Strahlengang des Ausgangsbildes des Röntgenbildverstärkers verstellt wird, dieses zu den Anschlüssen 15 und 16 lenkt. Wird diese Verstellung nicht vorgenommen, so kann das Ausgangsbild des Röntgenbildverstärkers zu einem nicht gezeigten Anschluß für eine Aufnahmekomponente gelenkt werden, der dem Anschluß 15 gegenüber liegt. Die Halterung 22 des Motors 19 wird auf der Grundplatte 23 um 180° gedreht und auf dieser befestigt. Die Ansteuerung des Motors 19 zum Verstellen des Spiegels 18 in der mit A bzw. B gekennzeichneten Richtung erfolgt invertiert zur Ansteuerung nach Figur 2.

Die Erfindung ermöglicht den Anschluß von Aufnahmekomponenten an zueinander spiegelsymmetrische Anschlüsse am Gehäuses des Lichtverteilers und das Lenken des Ausgangsbildes des Röntgenbildverstärkers über ein Spiegelsystem zu diesen Aufnahmekomponenten. Der Umbau des Spiegelsystems ist wenig zeitaufwendig. Materialkosten werden eingespart, da nur ein Gehäuse, ein Spiegelsystem mit Halterungen und eine Verstellvorrichtung herzustellen sind.

Die Halterungen 20, 21 und 22 können anstelle einer Schraubverbindung durch jede geeignete lösbare Verbindung, so zum Beispiel durch eine Rast- oder Schnappverbindung, auf der Grundplatte 23 befestigt sein.

Die Erfindung wurde am Beispiel eines Zweikanal-Lichtverteilers beschrieben. Selbstverständlich kann auch das Gehäuse und das Spiegelsystem eines Mehrkanal-Lichtverteilers so ausgeführt sein, daß die Aufnahmekomponenten an zu-einander spiegelsymmetrische Anschlüsse an-schließbar und das Ausgangsbild des Röntgenbildverstärkers zu diesen lenkbar ist.

## Ansprüche

1. Lichtverteiler (5) für ein Röntgendiagnostikgerät mit einem Gehäuse und mit einem im Gehäuse angeordneten Spiegelsystem mit mehreren Spiegeln (17, 18) zur Ablenkung des Strahlengan-ges des Ausgangsbildes eines Röntgenbildverstär-kers (4) zu Aufnahmekomponenten, die an ersten Anschlüssen (13, 14) des Gehäuses des Lichtverteilers (5) befestigt sind, **dadurch gekennzeichnet**, daß die Spiegel (17, 18) derart gelagert sind, daß jeder Spiegel (17, 18) an den Platz eines korrespondierenden Spiegels (18, 17) setzbar ist, daß

a) eine erste Anordnung des Spiegelsystems im Gehäuse den Strahlengang zu den ersten Anschlüssen (13, 14) für die Aufnahmekomponenten lenkt und

b) eine zweite, zur ersten spiegelsymmetrischen Anordnung des Spiegelsystems den Strahlengang zu den zweiten Anschlüssen (15, 16) für die Aufnahmekomponenten, die zu den ersten spiegelsymmetrisch sind, lenkt.

2. Lichtverteiler nach Anspruch 1, **dadurch gekennzeichnet**, daß die Spiegel (17, 18) auf Halterungen (20, 21) gelagert sind, die mit Schrauben (24, 25, 30 und 31) in Bohrungen einer Grundplatte (23) des Gehäuses des Lichtverteilers (5) auf dieser befestigt sind, wobei die Halterungen (20, 21) und die Bohrungen so aufeinander abgestimmt sind, daß das Spiegelsystem und Verstellmittel für die Spiegel (18) spiegelsymmetrisch eingebaut werden können.

3. Lichtverteiler nach Anspruch 2, **dadurch gekennzeichnet**, daß die Spiegel (17, 18) durch eine seitliche Zweipunkt-Lagerung um eine Achse (28, 34) verstellbar gelagert sind.

4. Lichtverteiler nach Anspruch 3, **dadurch gekennzeichnet**, daß ein Spiegel (18) über Verstellmittel (19, 36, 37, 38, 39) auf einer Führungsschiene (29) verstellbar ist und daß die Verstellmittel (19, 37) einer spiegelsymmetrischen Anordnung des Spiegels (18) im Gehäuse des Lichtverteilers (5) angepaßt werden können.

Geänderte Patentansprüche gemäss Regel 86(2) EPÜ.

1. Lichtverteiler (5) für ein Röntgendiagnostikgerät mit einem Gehäuse, mit am Gehäuse vorgesehenen Anschlüssen für Aufnahmekomponenten, wobei ein erstes Anschlußpaar (13, 14) und ein zweites Anschlußpaar (15, 16) spiegelsymmetrisch zueinander vorgesehen sind und mit einem im Gehäuse angeordneten Spiegelsystem mit mehreren Spiegeln (17, 18) zum lenken des Strahlenganges des Ausgangsbildes eines Röntgenbildverstärkers zu den Aufnahmekomponenten, wobei die Spiegel (17, 18) des Spiegelsystems derart gelagert sind, daß sie das Ausgangsbild des Röntgenbildverstärkers in einer ersten Position zu dem ersten Anschlußpaar (13, 14) und in einer zweiten, zur ersten spiegelsymmetrischen Position zu dem zweiten Anschlußpaar (15, 16) für die Aufnahmekomponente lenken können.

2. Lichtverteiler nach Anspruch 1, **dadurch gekennzeichnet**, daß die Spiegel (17, 18) auf Halterungen (20, 21) gelagert sind, die auf einer Grundplatte (23) des Gehäuses des Lichtverteilers (5) lösbar befestigt sind, wobei die Halterungen (20, 21) und die Befestigungen so aufeinander abgestimmt sind, daß die eine Halterung (20 bzw. 21 des einen Spiegels (17 bzw. 18) an dem Platz der anderen Halterung (21 bzw. 20) des anderen Spiegels (18 bzw. 17) des Spiegelsystems auf der Grundplatte (23) befestigt werden kann.

**FIG 1**

(Stand der Technik)

**FIG 2**

88 P 3 5 6 5 E

**FIG 3**

**FIG 4**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 710 425 (SIEMENS AG) * Seite 2, Zeile 17 - Seite 3, Zeile 37; Seite 4, Zeilen 8-31; Abbildungen 1,2 * | 1,3,4 | H 05 G 1/02 H 05 G 1/64 G 03 B 42/02 |
| A | US-A-3 684 354 (R.E. KOCH) * Spalte 2, Zeile 60 - Spalte 4, Zeile 48; Abbildungen 1,2 * | 1-3 | |
| A | US-A-4 058 833 (F.H. MEYER) * Spalte 5, Zeile 25 - Spalte 7, Zeile 47; Abbildung 1 * | 1 | |
| A | EP-A-0 051 430 (TOKYO SHIBAURA DENKI K.K.) * Spalte 5, Zeile 11 - Spalte 7, Zeile 3; Abbildung 2 * | 1 | |
| A | US-A-3 622 786 (B.H. WALKER) * Spalte 2, Zeilen 1-20; Spalte 3, Zeilen 10-29; Abbildung 1 * | 1 | RECHERCHIERTE SACHGEBIETE (Int. Cl.5) |
| A | EP-A-0 052 995 (TOKYO SHIBAURA DENKI K.K.) * Seite 6, Zeile 4 - Seite 7, Zeile 25; Abbildungen 2a,5,6a * & US-A-4 383 328 (Kat. A,D) | 1 | G 03 B H 04 N H 05 G |

Der vorliegende Recherchenbericht wurde für alle Patentansprüche erstellt

| Recherchenort | Abschlußdatum der Recherche | Prüfer |
|---|---|---|
| DEN HAAG | 21-08-1989 | HORAK G.I. |